# EUROPÄISCHE PATENTSCHRIFT

(11) **EP 4 159 388 B1**
(45) Veröffentlichungstag und Bekanntmachung des Hinweises auf die Patenterteilung: **02.07.2025**
(21) Anmeldenummer: 21199751.5
(22) Anmeldetag: 29.09.2021
(51) Int. Cl.: B25J 15/02, B25J 15/00

(54) **VORRICHTUNG MIT EINEM GREIFER**
DEVICE WITH A GRIPPER
DISPOSITIF DOTÉ D'UN PRÉHENSEUR

(43) Veröffentlichungstag der Anmeldung: 05.04.2023
(73) Patentinhaber: Mojin Robotics GmbH, 70771 Leinfelden-Echterdingen (DE)
(72) Erfinder: FRÖHLICH, Tim, 70771 Leinfelden-Echterdingen (DE); BENTELE, Jonas, 70565 Stuttgart (DE); Weißhardt, Florian, 71272 Renningen (DE)
(74) Vertreter: Szynka Smorodin Patentanwälte Partnerschaft mbB

(56) Entgegenhaltungen:
- ES-T3- 2 308 328
- JP-A- H07 186 082
- US-A1- 2009 315 281

## Beschreibung

Die vorliegende Erfindung betrifft eine Vorrichtung mit einem Greifer zum Greifen einer Kiste von oben.

Bei der Kiste kann es sich insbesondere um eine Getränkekiste handeln, die typischerweise mehrere Flaschen aufnimmt und z. B. im Logistik- oder auch Handelsbereich gehandhabt wird. Dabei können die Flaschen gefüllt oder auch bereits geleert sein (Leergutannahme bzw. -logistik). Dies soll ein mögliches Anwendungsgebiet illustrieren, den Gegenstand aber zunächst nicht in seiner Allgemeinheit beschränken.

Die JP H 07 186082 A betrifft eine Greifvorrichtung zum Anheben von Kisten, die von oben in der Kiste platziert und dann verspreizt wird. Hierzu weist die Greifvorrichtung Klemmbacken auf, wobei dann in jeder Innenecke der Kiste eine Klemmbacke reibschlüssig anliegt.

Der vorliegenden Erfindung liegt das technische Problem zugrunde, eine vorteilhafte Vorrichtung mit einem Greifer anzugeben.

Dies wird erfindungsgemäß mit der Vorrichtung nach Anspruch 1 gelöst. Deren Greifer weist einen Mittenarm auf, der um eine Montageachse drehbar gelagert ist, bspw. an einem Roboterarm oder im Allgemeinen auch an einem Kran. An dem Mittenarm ist ein erster Außenarm in einem ersten Aufhängungspunkt drehbar gelagert, wobei sich mit dem Verdrehen des ersten Außenarms um die entsprechende Aufhängungsachse ein Relativabstand verändern lässt, der zwischen dem dem Mittenarm distalen Ende des ersten Außenarms und der Montageachse genommen wird.

Dabei ist die Drehbarkeit um die erste Aufhängungsachse gegenläufig an die Drehbarkeit des Mittenarms um seine Montageachse gekoppelt, wird also bspw. in einer Aufsicht betrachtet bei einer Drehung des Mittenarms im Uhrzeigersinn der erste Außenarm gegen den Uhrzeigersinn verdreht, und umgekehrt. Zum Greifen der Kiste kann der Greifer vertikal abgesenkt, also der Kiste mit einer vertikalen Bewegungskomponente von oben angenähert werden. Durch Verdrehen des Mittenarms und des ersten Außenarms wird dann der Relativabstand verändert und damit die Kiste gegriffen.

Dieses Greifen bzw. Klemmen kann im Allgemeinen auch zwischen dem distalen Ende des ersten Außenarms und einem bspw. statisch am Mittenarm angeordneten Anlageelement (z. B. Zapfen) erfolgen, bevorzugt ist am Mittenarm jedoch ein zweiter, ebenfalls drehbar gelagerter Außenarm vorgesehen (siehe unten im Detail). Generell kann die gegenläufige Verdrehbarkeit des Greifers in Verbindung mit dessen Annäherung von oben bspw. dahingehend von Vorteil sein, dass sich der Raumbedarf des Greifers im zusammengefahrenen Zustand, also bei minimalem Relativabstand, verringern lässt. Dies kann das Heranbringen des Greifers an die Kiste unter beengten Raumverhältnissen vereinfachen, bspw. wenn die Kiste neben einer Wand steht und/oder neben einer oder mehreren anderen Kisten bzw. Kistenstapeln, insbesondere von benachbarten Stapeln nach oben überragt wird.

Bevorzugte Ausgestaltungen finden sich in der gesamten Offenbarung und insbesondere in den abhängigen Ansprüchen. Dabei wird bei der Darstellung der Merkmale nicht immer im Einzelnen zwischen Vorrichtungs- und Verfahrens- bzw. Verwendungsaspekten unterschieden, sondern ist die Beschreibung zumindest implizit stets hinsichtlich sämtlicher Anspruchskategorien zu lesen. Wird bspw. eine für eine bestimmte Verwendung geeignete Vorrichtung beschrieben, ist dies zugleich als Offenbarung der entsprechenden Verwendung zu verstehen; umgekehrt ist die Beschreibung einer bestimmten Verwendung oder Verfahrensweise auch auf eine Vorrichtung zu lesen, die für diese Verfahrensweise/Verwendung eingerichtet ist.

Beim Absenken des Greifers und/oder Klemmen der Kiste können die Achsen des Greifers, also die Montageachse und Aufhängungsachse(n), vertikal ausgerichtet sein. Letzteres meint, dass sie zumindest eine überwiegende Richtungskomponente in der vertikalen Richtung haben, bevorzugt parallel dazu liegen. Die "vertikale Richtung" bezieht sich auf das ruhende Koordinatensystem, entspricht also der Lotrichtung. In einer zur ersten Aufhängungsachse senkrechten Ebene, die dann z. B. in der Anwendung horizontal liegt, kann die Verdrehbarkeit des ersten Außenarms bspw. über einen ersten Azimutwinkel beschrieben werden, der zwischen einer Verbindungslinie von der ersten Aufhängungsachse zur Montageachse und einer Mittenlinie des ersten Außenarms genommen wird (Letztere kann sich insbesondere zwischen der ersten Aufhängungsachse und einer ersten distalen Aufhängungsachse erstrecken, siehe unten im Detail). Nimmt der erste Azimutwinkel zu, wird auch der Relativabstand größer, und umgekehrt nimmt der Relativabstand mit dem ersten Azimutwinkel ab.

Infolge der "Kopplung" der Drehbewegungen um unterschiedliche Achsen erfolgt bei einer Drehung um eine der Achsen auch eine Drehung um die andere Achse (je nach betrachteten Achsen gegen- oder auch gleichläufig, siehe unten), was im Allgemeinen bspw. auch über gesonderte Aktoren mit einer entsprechenden Ansteuerung erfolgen kann. Bevorzugt ist jedoch eine mechanische Kopplung, bspw. mit einem Zahnrad oder Riemen, insbesondere Zahnriemen. Die Krafteinleitung bzw. Einkopplung der Drehbewegung erfolgt dann vorzugsweise über nur eine der Achsen und wird über die mechanische Kopplung auf die andere(n) Achse(n) übertragen. Bevorzugt ist die Montageachse angetrieben, was bspw. ein übermäßig großes Gewicht außen, also versetzt zur Montageachse, vermeiden und damit z. B. Kippmomente reduzieren kann. Auch unabhängig von der Krafteinkopplung im Einzelnen sind die Drehbewegungen bevorzugt mit einem Übersetzungsverhältnis I = 1 gekoppelt.

Die zum Absenken/Anheben bzw. Verdrehen des Greifers "eingerichtete" Vorrichtung kann dazu einerseits mechanisch ertüchtigt sein, also in allgemeinen Worten eine Hebeeinrichtung zum Absenken/Anheben des Greifers sowie einen Aktor zum Aufbringen der Drehbewegung aufweisen. Der Aktor für die Drehbewegung kann im Allgemeinen auch in die Hebeeinrichtung integriert sein, bevorzugt ist er in den Greifer integriert. Ferner kann sie bspw. auch eine Steuereinheit umfassen, in der entsprechende Befehle hinterlegt sind. Bei Abarbeitung dieser Befehle kann die Steuereinheit den Greifer bzw. die Vorrichtung zur Durchführung der Verfahrensschritte (Absenken, Greifen etc.) veranlassen, bspw. durch entsprechende Ansteuerung von Aktoren. Die Steuereinheit kann dabei integriert (z. B. in einem Mikrokontroller) oder auch dezentral in einer übergeordneten Rechnereinheit realisiert sein. Zum Positionieren und Ausrichten des Greifers kann eine Sensoreinheit vorgesehen sein, bevorzugt ist diese am Greifer selbst montiert. Diese kann als Kamera für eine konventionelle Abbildung oder auch als Entfernungsmessgerät zur Aufnahme eines Abstandsbilds ausgelegt sein.

In bevorzugter Ausgestaltung sind die Aufhängungsachse(n) und Montageachse am Mittenarm des Greifers in einer starren Relativanordnung vorgesehen, also mit festem Abstand und festen Winkeln zueinander. Wenngleich im Allgemeinen auch ein in sich weitergehend gelenkig gestalteter Mittenarm möglich ist (Relativverkippen der Achsen), kann die starre Anordnung der Achsen bspw. hinsichtlich der Stabilität und des Gewichts von Vorteil sein. Bevorzugt liegen die starren Achsen des Greifers parallel zueinander.

Im Allgemeinen kann am distalen Ende des ersten Außenarms zum Greifen der Kiste bspw. auch ein starrer Zapfen o. ä. vorgesehen sein, mit dem die Kiste geklemmt wird. Erfindungsgemäß ist am distalen Ende des ersten Außenarms jedoch ein erstes Klemmelement angeordnet, und zwar in einem ersten distalen Aufhängungspunkt um eine erste distale Aufhängungsachse drehbar. Die Drehbarkeit des ersten Klemmelements ist dabei gegenläufig an die Drehbarkeit des ersten Außenarms am Mittenarm gekoppelt. Wird also bspw. in Aufsicht betrachtet der erste Außenarm im Uhrzeigersinn am Mittenarm gedreht, dreht sich das erste Klemmelement entgegen dem Uhrzeigersinn, und umgekehrt.

Damit kann bspw. ein Klemmbereich des Klemmelements, der dann im Zuge des Greifens eine Anlage an der Kiste findet, beim Verändern des Relativabstands mit gleichbleibender Orientierung an die Kiste heran bewegt werden. Damit lässt sich, etwa im Vergleich zum starren Zapfen, auch ein größerer Klemmbereich realisieren, was bspw. hinsichtlich der Kraftübertragung von Vorteil sein kann. Andererseits ist durch die entsprechende Lagerung des Klemmelements gleichwohl ein definiertes Annähern an die Kiste möglich, wird also bspw. einem Verkanten etc. vorgebeugt. Bevorzugt liegt die erste distale Aufhängungsachse parallel zur ersten Aufhängungsachse und/oder Montageachse.

Generell weist das Klemmelement ein Auflager auf, auf dem dann beim Anheben der Kiste die Last ruht, bspw. ein Tragegriff der Kiste aufliegt. Mit dem Verdrehen des Greifers kann dann einerseits dieses Auflager unter dem entsprechenden Teil der Kiste, insbesondere Tragegriff, angeordnet werden. Ferner kann damit auch ein seitlicher Einfassungsbereich des Klemmelements solchermaßen an den Teil der Kiste / Tragegriff seitlich (horizontal) angenähert werden, dass dieser dann nicht mehr seitlich vom Auflager herunterrutschen kann, bevorzugt kommt der seitliche Einfassungsbereich dabei in Anlage an den Teil der Kiste / Tragegriff. Dieses seitliche Einfassen wird in der vorliegenden Offenbarung auch als "Klemmen" bezeichnet. Es kann, bezogen auf die Kiste, von innen oder außen erfolgen, wobei Ersteres auch als "Verspreizen" und Letzteres als "Einklemmen" bezeichnet wird.

Bevorzugt kann das Klemmelement ein L-Profil aufweisen, dessen liegender Schenkel das Auflager bildet und dessen stehender Schenkel den seitlichen Einfassungsbereich bildet. Bevorzugt erfolgt das Greifen von innen (Verspreizen) und weist entsprechend der liegende Schenkel von dem Mittenarm weg (er erstreckt sich zugleich vom stehenden Schenkel und vom Mittenarm weg). Generell gelten diese Ausführungen, auch jene im vorherigen Absatz, bevorzugt analog für ein zweites Klemmelement (siehe unten im Detail).

Bei einer bevorzugten Ausführungsform weist das Klemmelement ein Arretierungsmittel auf, das versetzt wird, wenn der Klemmbereich, insbesondere ein Auflager davon, in Anlage kommt. Das Arretierungsmittel kann die Kiste dann in einer zum Auflager entgegengesetzten Richtung fixieren und so einem Verrutschen bzw. Verkippen vorbeugen. Bevorzugt wird das Arretierungsmittel dazu, bezogen auf die Orientierung des Greifers beim Absenken bzw. Anheben, vertikal versetzt, und zwar nach vertikal unten. Es kann dann bspw. ein Tragegriff der Kiste auf dem Auflager aufliegen und das Arretierungsmittel den Tragegriff zusätzlich von oben fixieren.

Im Allgemeinen ließe sich der Versatz des Arretierungsmittel bspw. auch über einen Aktor realisieren, etwa einen Linearaktor. Bevorzugt ist das Arretierungsmittel jedoch über einen Umlenkmechanismus mechanisch an das Auflager gekoppelt. Nimmt das Auflager eine Last auf und wird es dementsprechend ein Stück nach unten versetzt, kann der Umlenkmechanismus diesen Versatz mit einer Übersetzung in einen größeren Versatz des Arretierungsmittels nach unten umsetzen, sodass sich dieses zum Auflager hinbewegt, also ein Abstand dazwischen abnimmt.

In bevorzugter Ausgestaltung weist der Greifer einen zweiten Außenarm auf, der am Mittenarm in einem zweiten Aufhängungspunkt um eine zweite Aufhängungsachse drehbar gelagert ist. Diese Drehbarkeit ist dabei gegenläufig zur Drehbarkeit um die Montageachse, es wird auf die vorstehenden Anmerkungen zum ersten Außenarm verwiesen. Der erste und der zweite Außenarm haben folglich den gleichen Drehsinn, ihre distalen Enden bewegen sich beim Zusammenfahren also zum Mittenarm (insbesondere zur Montageachse) und damit auch zueinander und beim Auseinanderfahren davon weg und auseinander. Die zweite Aufhängungsachse liegt bevorzugt parallel zur Montageachse und/oder ersten Aufhängungsachse.

Die Verdrehbarkeit des zweiten Außenarms lässt sich bspw. über einen zweiten Azimutwinkel beschreiben, der zwischen einer Verbindungslinie von der zweiten Aufhängungsachse zur Montageachse und einer Mittenlinie des zweiten Außenarms genommen wird (Letztere kann sich insbesondere zwischen der zweiten Aufhängungsachse und einer zweiten distalen Aufhängungsachse erstrecken, siehe unten im Detail). Der erste und der zweite Azimutwinkel sind bevorzugt über die Verdrehung hinweg Stufenwinkel, also in jeweiligen Drehposition immer dem Betrag nach gleich groß.

Mit dem Verdrehen wird der Relativabstand zwischen dem distalen Ende des ersten Außenarms und jenem des zweiten Außenarms verkleinert oder vergrößert, womit in der Anwendung die Kiste gegriffen bzw. eingeklemmt wird. Das Greifen erfolgt dann also zwischen den distalen Enden des ersten und zweiten Außenarms, bevorzugt durch Verspreizen innenseitig an der Kiste durch Vergrößern des Relativabstands.

Gemäß einer bevorzugten Ausführungsform sind die erste und zweite Aufhängungsachse axial betrachtet in einander entgegengesetzten Endbereichen des Mittenarms angeordnet und sitzt die Montageachse dazwischen. In anderen Worten liegen der erste und zweite Aufhängungspunkt an dem Mittenarm auf unterschiedlichen Seiten des Montagepunkts. Dies kann bspw. hinsichtlich der Lastverteilung bzw. Kippmomente von Vorteil sein, insbesondere einen weitgehend symmetrischen Aufbau erlauben. Bevorzugt sind der erste und zweite Aufhängungspunkt, insbesondere die erste und zweite Aufhängungsachse, um die Montageachse zweizählig drehsymmetrisch zueinander (punktsymmetrisch), was weiter bevorzugt auch für den ersten und zweiten Außenarm gilt.

In bevorzugter Ausgestaltung ist am distalen Ende des zweiten Außenarms ein zweites Klemmelement angeordnet, nämlich um eine zweite distale Aufhängungsachse drehbar und gegenläufig an die Drehbarkeit des zweiten Außenarms um die zweite Aufhängungsachse gekoppelt.

Die Klemmelemente haben jeweils einen Klemmbereich, der dann beim Klemmen der Kiste jeweils in Anlage kommt. Beim Verdrehen des ersten und zweiten Außenarms ändert sich der Abstand zwischen den Klemmbereichen, kann der Greifer die Kiste also einklemmen (Verringern des Relativabstands) oder bevorzugt in der Kiste verspreizt werden (Vergrößern des Relativabstands). Bei diesen Klemmbereichen kann es sich insbesondere um die vorstehend diskutierten seitlichen Einfassungsflächen handeln. Unabhängig davon, ob zum Einklemmen oder Verspreizen vorgesehen, sind die Klemmbereiche bevorzugt parallel zueinander ausgerichtet, wobei diese Ausrichtung auch bestehen bleibt, wenn der Relativabstand verändert wird. Dies kann bspw. hinsichtlich des Klemmvorgangs von Vorteil sein, die Klemmelemente lassen sich definiert in Anlage an der Kiste bringen. Die Klemmbereiche können insbesondere Klemmflächen sein, und es sind dann diese parallel zueinander ausgerichtet. Generell kann bevorzugt sein, dass sich die distalen Aufhängungspunkte, an welchen die Klemmelemente am jeweiligen Außenarm montiert sind, beim Verdrehen auf einer Linie bewegen, auf welcher auch der Montagepunkt liegt (in einer vertikalen Aufsicht betrachtet).

Gemäß einer bevorzugten Ausführungsform weist jedes der Klemmelemente sowohl innenseitig (dem anderen Klemmelement zugewandt) als auch außenseitig (dem anderen Klemmelement abgewandt) jeweils einen Klemmbereich auf, kann bzw. wird es also sowohl zum Verspreizen also auch zum Einklemmen genutzt. So lassen sich bspw. kleinere Gegenstände zwischen den Innenseiten der Klemmelemente einklemmen und aufnehmen, wohingegen bei größeren Gegenständen bzw. Kisten die außenseitigen Klemmbereiche verspreizt werden können. Insbesondere können die außenseitigen Klemmelement zum Anheben der Kiste selbst genutzt werden, wohingegen in einem anderen Arbeitsschritt mit den innenseitigen Klemmbereichen bspw. ein Gegenstand zum Unterbringen in oder Herausnehmen aus der Kiste gegriffen wird, siehe unten im Detail.

Wie eingangs erwähnt, ist der Greifer bevorzugt als Effektor an einem Roboterarm vorgesehen. Dieser kann im Allgemeinen bspw. auch mit einer oder mehreren Linearachsen ausgeführt sein, bevorzugt ist jedoch ein Mehrachs-Knickarmroboter (mit z. B. 5, 6 oder auch 7 Achsen). Der Roboterarm kann an einer statischen Basis, in Anbetracht des reduzierten Gewichts bzw. der verringerten Kippmomente aber auch an einer mobilen Basis vorgesehen sein.

Die Erfindung betrifft auch die Verwendung eines vorliegend offenbarten Greifers bzw. der entsprechenden Vorrichtung zum Anheben einer Kiste von oben. Dabei wird der Greifer bspw. zunächst horizontal über der Kiste ausgerichtet. Vor dem Absenken kann der bzw. können die Außenarme auf die Abmessungen der Kiste eingestellt werden, sodass die Klemmelemente beim Absenken nicht mit benachbarten Kisten und/oder dem Inhalt der Kiste kollidieren. Das Absenken erfolgt dann mit einer vertikalen Richtungskomponente, bevorzugt ist eine ausschließlich vertikale Absenkbewegung. Sobald der Greifer, insbesondere die Klemmelemente bzw. deren Klemmbereiche, einen vertikalen Überlapp mit der Kiste haben, kann durch Verdrehen der Relativabstand verändert und die Kiste geklemmt werden.

In bevorzugter Ausgestaltung wird der Greifer innenseitig an der Kiste verspreizt. Dies kann bspw. dahingehend vor Vorteil sein, dass die Kiste auch dann angehoben werden kann, wenn sie neben anderen Kisten bzw. Kistenstapeln steht. Im zusammengefahrenen Zustand kann der Greifer eine projizierte Grundfläche haben (senkrechte Projektion in eine horizontale Ebene), die nicht größer als die Grundfläche der Kiste ist. Dies kann das Absenken auch unter beengten Raumverhältnissen erlauben (benachbarte Stapel etc.). Im Allgemeinen lässt sich damit zwar auch eine allumseitig eingefasste Kiste herausheben, bevorzugt ist diese jedoch zumindest zu einer Seite hin frei.

In bevorzugter Ausgestaltung ist die Kiste eine Getränkekiste, also ein Träger mit mehreren Aufnahmen für Flaschen. Diese kann bzw. wird mit dem Greifer bevorzugt an ihren Haltegriffen geklemmt. Nach dem Klemmen bzw. beim Aufnehmen können die Haltegriffe der Kiste auf Auflagern der Klemmelemente aufliegen.

In bevorzugter Ausgestaltung wird der Tragegriff der Kiste mit einem Klemmelement mit Arretierungsmittel gegriffen, welches mit dem Greifen oder Anheben vertikal versetzt wird. Infolge des Vertikalversatzes legt es sich von oben an den Tragegriff an, was bspw. einem unerwünschten Verkippen der angehobenen Getränkekiste vorbeugen kann (z. B. bei nicht exakt mittigem Anheben oder ungleichmäßiger Belegung mit Flaschen). Das Arretieren des Tragegriffs kann auch ein gezieltes Verkippen der gegriffenen Kiste ermöglichen, z. B. um diese beim Abstellen auf einer anderen Kiste einzufädeln oder in ein schräges Regal abzustellen. Bevorzugt ist der Tragegriff nach oben und unten und auch nach innen vom ersten Klemmelement eingefasst; weiter bevorzugt ist auch das zweite Klemmelement entsprechend ausgestaltet und fasst es einen Tragegriff entsprechend ein.

Eine bevorzugte Ausführungsform betrifft die Klemmelemente, die sowohl innen-/ als auch außenseitig jeweils mit einem Klemmbereich ausgestattet sind (siehe vorne im Detail). Dabei werden in einem Arbeitsschritt die einander zugewandten Klemmbereiche zum Greifen und Anheben einer Flasche genutzt, diese kann bspw. in die Getränkekiste einsortiert oder aus dieser herausgenommen werden. Der Greifer ist dabei weitgehend zusammengefahren, die innenseitigen Klemmbereiche sind also zum Greifen am Flaschenhals relativ nah beieinander angeordnet. In einem anderen Arbeitsschritt, der zuvor oder danach erfolgen kann, sind die Klemmelemente und damit ihre außenseitigen Klemmbereiche in einem auseinandergefahrenen Zustand weiter voneinander beabstandet und an den Tragegriffen der Getränkekiste angeordnet.

Im Folgenden wird die Erfindung anhand von Ausführungsbeispielen näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: in schematischer Darstellung einen Greifer in Aufsicht;
- Figur 2: den Greifer gemäß Figur 1 zur Illustration des Prinzips in einem weiter auseinandergefahrenen Zustand;
- Figur 3: eine Vorrichtung mit einem Greifer in einer schematischen Seitenansicht;
- Figur 4a-c: mehrere Verfahrensschritte beim Anheben einer Getränkekiste;
- Figur 5: ein Anheben einer Flasche in einem im Vergleich zu den Figuren 4a-c anderen Arbeitsschritt.

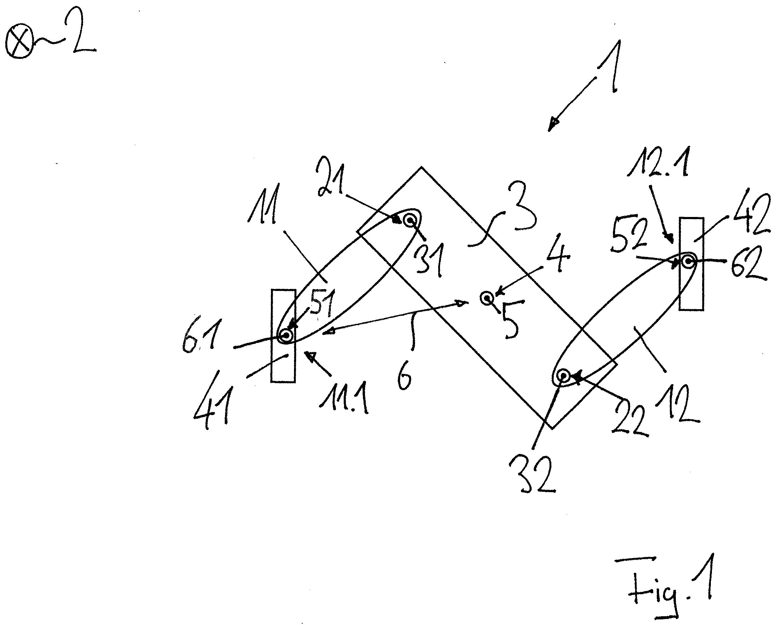

**Figur 1** zeigt einen Greifer 1 in einer Aufsicht von oben, also entlang der Vertikalrichtung 2 darauf blickend. Der Greifer 1 weist einen Mittenarm 3 auf, der in einem Montagepunkt 4 um eine Montageachse 5 drehbar gelagert ist. Die Montageachse 5 liegt vorliegend parallel zur Vertikalrichtung 2 und steht senkrecht auf der Zeichenebene. An dem Mittenarm 3 sind ein erster Außenarm 11 und ein zweiter Außenarm 12 angeordnet. Der erste Außenarm 11 ist in einem ersten Aufhängungspunkt 21 um eine erste Aufhängungsachse 31 drehbar gelagert. Mit dieser Drehbarkeit lässt sich ein Relativabstand 6 zwischen einem distalen Ende 11.1 des ersten Außenarms 11 und der Montageachse 5 verändern. Dabei ist die Drehbarkeit des ersten Außenarms 11 mechanisch an die Drehbarkeit des Mittenarms 3 um die Montageachse 5 gekoppelt (nicht im Einzelnen dargestellt, z. B. über Zahnrad oder Zahnriemen realisiert), wird also bei einer Drehung des Mittenarms 3 um die Montageachse 5 zugleich der erste Außenarm 11 um die erste Aufhängungsachse 31 gedreht, und zwar mit gegenläufigem Drehsinn.

Am distalen Ende 11.1 des ersten Außenarms 11 ist ein erstes Klemmelement 41 angeordnet, nämlich in einem ersten distalen Aufhängungspunkt 51 um eine erste distale Aufhängungsachse 61 drehbar. Diese liegt parallel zur ersten Aufhängungsachse 31 und zur Montageachse 5, und die Drehbarkeit ist gegenläufig an die Drehbarkeit des ersten Außenarms 11 um die erste Aufhängungsachse 31 gekoppelt (also gleichläufig an die Drehbarkeit um die Montageachse). Mit dem ersten Klemmelement 41 wird in der Anwendung eine Kiste gegriffen, insbesondere eine Getränkekiste, bzw. auch eine Flasche, siehe unten im Detail.

Der zweite Außenarm 12 ist in einem zweiten Aufhängungspunkt 22 um eine zweite Aufhängungsachse 32 drehbar gelagert und dabei gegenläufig an die Drehbarkeit um die Montageachse 5 gekoppelt (über Zahnräder oder Zahnriemen, nicht dargestellt). Am distalen Ende 12.1 des zweiten Außenarms 12 ist ein zweites Klemmelement 42 in einem zweiten distalen Aufhängungspunkt 52 um eine zweite distale Aufhängungsachse 62 drehbar gelagert. Diese Drehbarkeit ist gegenläufig an die Drehbarkeit um die zweite Aufhängungsachse 32 gekoppelt, also gleichläufig an die Drehbarkeit um die Montageachse 5.

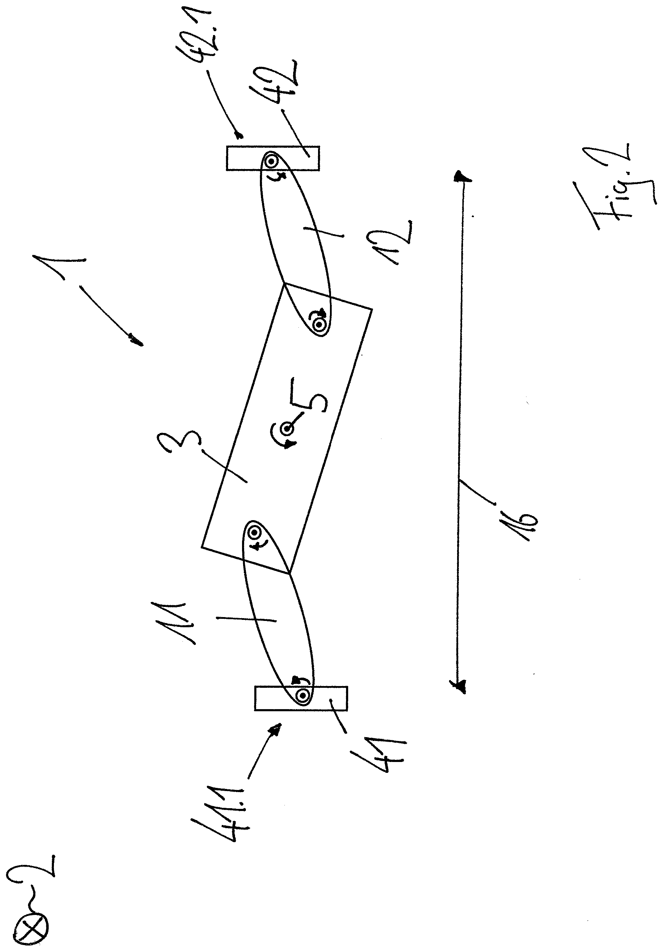

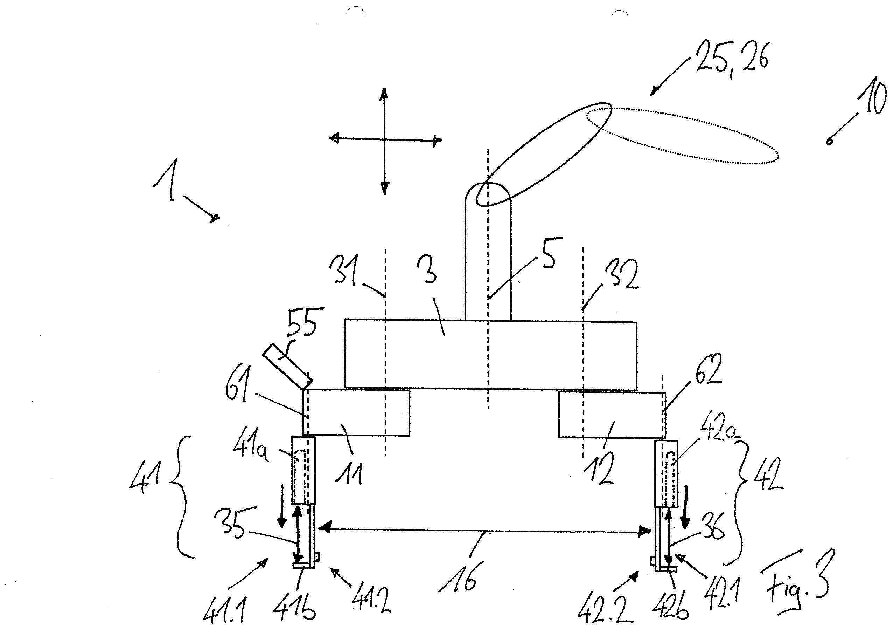

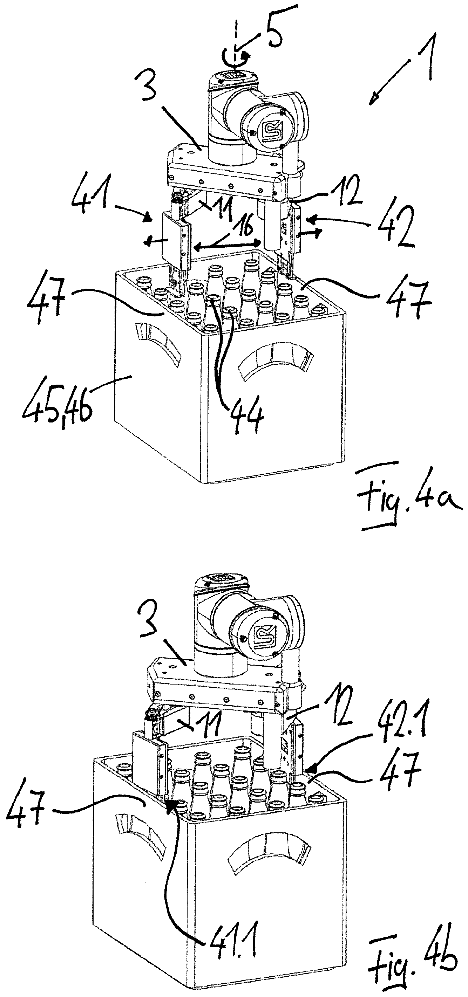

**Figur 2** zeigt den Greifer 1 in einer gegenüber Figur 1 verdrehten Anordnung, illustriert also in Zusammenschau mit Figur 1 die beschriebene Kopplung von Mittenarm 3, Außenarmen 11, 12 und Klemmelementen 41, 42. Über die Montageachse 5 wird die Drehbewegung aufgebracht, wobei infolge der Kopplung auch die Außenarme 11, 12 und Klemmelemente 41, 42 verdreht werden. Dadurch wird ein Abstand 16 zwischen den Klemmelementen 41 verändert, nämlich vorliegend vergrößert (bei einer entgegengesetzten Drehung des Mittenarms 3 würde er verkleinert). Die Klemmelemente 41, 42 weisen jeweils Klemmbereiche 41.1, 42.1 auf (vgl. auch Figur 3 im Detail), die trotz des Verdrehens parallel zueinander ausgerichtet bleiben. Durch Verändern des Abstands 16 kann eine Kiste aufgenommen werden, vgl. die Figuren 4a-c im Detail.

**Figur 3** zeigt eine Vorrichtung 10 mit dem Greifer 1 in einer Seitenansicht, der Greifer 1 ist an einer Hebeeinrichtung 25 angeordnet, vorliegend einem Roboterarm 26. Damit kann der Greifer 1 oberhalb einer Kiste positioniert und abgesenkt bzw. angehoben werden. An dem ersten Außenarm 11 ist eine Sensoreinheit 55 vorgesehen, die vorliegend als Kamera zum Positionieren und Ausrichten des Greifers 1 genutzt wird. Bzgl. des Zusammenwirkens von Mittenarm 3, Außenarmen 11, 12 und Klemmelementen 41, 42 wird auch auf die vorstehende Beschreibung verwiesen, generell werden im Rahmen der vorliegenden Offenbarung gleiche Teile bzw. Teile mit gleicher Funktion mit den gleichen Bezugszeichen versehen.

In der Seitenansicht gemäß Figur 3 sind ferner die Klemmelemente 41, 42 weiter im Detail zu erkennen. Zusätzlich zu den außenseitigen, einander abgewandten Klemmbereichen 41.1, 42.1 weisen diese innenseitige, einander zugewandte Klemmbereiche 41.2, 42.2 auf. Mit Ersteren kann eine Kiste, insbesondere Getränkekiste von innen gegriffen werden (Figuren 4a-c), wohingegen Letztere in zusammengefahrenem Zustand so nahe zusammengebracht werden können, dass sich eine einzelne Flasche am Flaschenhals greifen und z. B. umsortieren lässt.

Ferner weisen die Klemmelemente 41, 42 jeweils ein Arretierungsmittel 41a, 42a auf, das zur Verringerung eines jeweiligen vertikalen Abstands 35, 36 nach unten versetzt wird (die Arretierungsmittel sind strichliert dargestellt, da sie im nicht ausgefahrenen Zustand in einem Gehäuse angeordnet sind). Damit kann, sobald der jeweilige Klemmbereich 41.1, 42.1 an einem Tragegriff der Kiste positioniert ist, dieser Tragegriff von oben geklemmt werden, was z. B. einem Verkippen oder Herausrutschen vorbeugen kann. Im Einzelnen liegt der Tragegriff dabei auf einem jeweiligen Auflager 41b, 42b auf, wobei dieses über einen Umlenkmechanismus (nicht dargestellt) an das jeweilige Arretierungsmittel 41a, 42a gekoppelt ist. Sobald beim Anheben eine Last auf das jeweilige Auflager 41b, 42b übertragen wird, wird das jeweilige Arretierungsmittel 41a, 42a nach unten bewegt und hält den Tragegriff.

Die **Figuren 4a****-c** illustrieren das Aufnehmen einer Kiste 45, vorliegend einer Getränkekiste 46. Der Greifer 1 wird zunächst oberhalb der Kiste 45 positioniert und horizontal ausgerichtet, sowie auf die Breite der Kiste 45 eingestellt. Dies erfolgt durch Verdrehen des Mittenarms 3 um die Montageachse 5, vgl. die vorstehende Erläuterung. Der Abstand 16 wird so eingestellt, dass sich die Klemmelemente 41, 42 dann zwischen den Flaschen 44 und den Tragegriffen 47 absenken lassen.

**Figur 4b** illustriert den Greifer 1 nach dem Absenken, die Klemmbereiche 41.1, 42.1 sind vertikal auf Höhe der Tragegriffe 47 positioniert. Sie werden dann durch entsprechendes Verdrehen des Mittenarms 3 voneinander weg bewegt, bis sie in Anlage an den jeweiligen Tragegriff 47 kommen. Dies kann bspw. über einen Anschlagssensor überwacht werden.

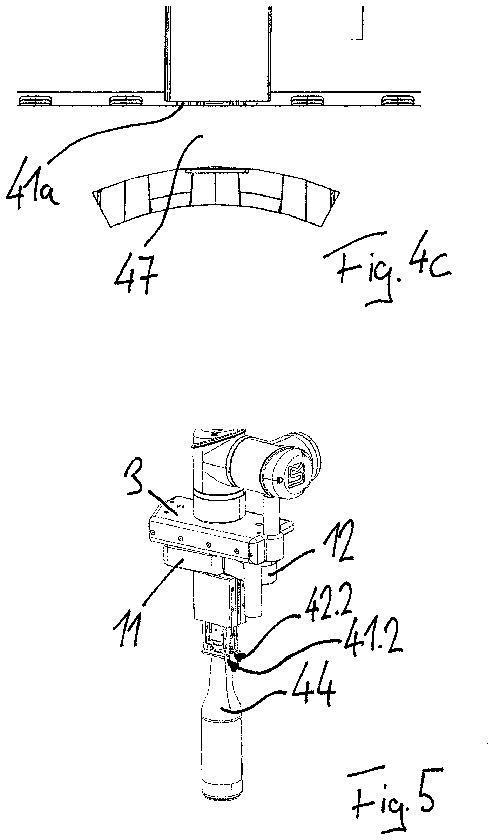

Anschließend kann der Greifer 10 angehoben werden, wobei der jeweilige Tragegriff 47 auf dem jeweiligen Auflager 41b, 42b aufliegt und infolgedessen das jeweilige Arretierungsmittel 41a, 42a aktuiert wird. Dies ist in **Figur 4c** für das erste Klemmelement 41 dargestellt. Wird die Kiste 45 dann am gewünschten Ort abgestellt, wird die Last von den Auflagern 41b, 42b genommen und werden die Arretierungsmittel 41a, 42a wieder gelöst. Die Klemmelemente 41 können dann durch entsprechendes Verdrehen des Mittenarms 3 wieder ein Stück nach innen versetzt werden, und anschließend kann der Greifer nach oben herausgenommen werden.

**Figur 5** zeigt, wie mit dem zusammengefahrenen Greifer 1, nämlich den einander zugewandten Klemmbereichen 41.2, 42.2 der Klammelemente 41, 42, eine einzelne Flasche 44 angehoben wird.

**Bezugszeichenliste**

| | |
|---|---|
| Greifer | 1 |
| Vertikalrichtung | 2 |
| Mittenarm | 3 |
| Montagepunkt | 4 |
| Montageachse | 5 |
| Relativabstand | 6 |
| Vorrichtung | 10 |
| erster Außenarm | 11 |
| distales Ende des ersten Außenarms | 11.1 |
| zweiter Außenarm | 12 |
| distales Ende des zweiten Außenarms | 12.1 |
| Abstand | 16 |
| erster Aufhängungspunkt | 21 |
| zweiter Aufhängungspunkt | 22 |
| Hebeeinrichtung | 25 |
| Roboterarm | 26 |
| erste Aufhängungsachse | 31 |
| zweite Aufhängungsachse | 32 |
| vertikaler Abstand (erstes Klemmelement) | 35 |
| vertikaler Abstand (zweites Klemmelement) | 36 |
| erstes Klemmelement | 41 |
| Klemmbereiche | 41.1, 41.2 |
| Arretierungsmittel | 41a |
| Auflager | 41b |
| zweites Klemmelement | 42 |
| Klemmbereiche | 42.1, 42.2 |
| Arretierungsmittel | 42a |
| Auflager | 42b |
| Flaschen | 44 |
| Kiste | 45 |
| Getränkekiste | 46 |
| Tragegriffe | 47 |
| erster distaler Aufhängungspunkt | 51 |
| zweiter distaler Aufhängungspunkt | 52 |
| Sensoreinheit | 55 |
| erste distale Aufhängungsachse | 61 |
| zweite distale Aufhängungsachse | 62 |

## Patentansprüche

1. Vorrichtung (10) mit einem Greifer (1) zum Greifen einer Kiste von oben,
welcher Greifer (1) einen Mittenarm (3), der in einem Montagepunkt (4) um eine Montageachse (5) drehbar gelagert ist, und
einen ersten Außenarm (11) aufweist, der an dem Mittenarm (3) in einem ersten Aufhängungspunkt (21) um eine erste Aufhängungsachse (31) solchermaßen drehbar gelagert ist, dass mit der Drehbarkeit ein Relativabstand (6) zwischen einem dem Mittenarm (3) distalen Ende (11.1) des ersten Außenarms (11) und der Montageachse (5) veränderbar ist,
wobei die Drehbarkeit um die erste Aufhängungsachse (31) mit gegenläufigem Drehsinn an die Drehbarkeit um die Montageachse (5) gekoppelt ist,
wobei die Vorrichtung (10) für ein vertikales Absenken des Greifers (1) zum Annähern an die Kiste von oben, sowie
für ein Verdrehen des Mittenarms (3) und des ersten Außenarms (11) zum Verändern des Relativabstands (6) zum Greifen der Kiste eingerichtet ist **dadurch gekennzeichnet, dass**
an dem distalen Ende (11.1) des ersten Außenarms (11) ein erstes Klemmelement (41) angeordnet ist, das in einem ersten distalen Aufhängungspunkt (51) am ersten Außenarm (11) um eine erste distale Aufhängungsachse (61) drehbar gelagert ist, und zwar gegenläufig an die Drehbarkeit des ersten Außenarms (11) um die erste Aufhängungsachse (31) gekoppelt,
wobei das erste Klemmelement (41) ein Auflager (41b) aufweist, welches dazu ausgelegt ist, dass darauf beim Anheben der Kiste die Last ruht.

2. Vorrichtung (10) nach Anspruch 1, bei welchem die Achsen (5, 31) relativ zueinander starr am Mittenarm (3) angeordnet sind.

3. Vorrichtung (10) nach Anspruch 1 oder 2, bei welchem das erste Klemmelement (41) ein Arretierungsmittel (41a) aufweist, das entlang eines Klemmbereichs (41.1) des ersten Klemmelements (41) vertikal versetzt wird, wenn der Klemmbereich (41.1) in Anlage kommt.

4. Vorrichtung (10) nach Anspruch 3, bei welchem das Arretierungsmittel (41a) über einen Umlenkmechanismus solchermaßen an ein Auflager (41b) gekoppelt ist, dass es bei einer Last auf dem Auflager zu diesem hin bewegt wird.

5. Vorrichtung (10) nach einem der vorstehenden Ansprüche, mit einem zweiten Außenarm (12), der an dem Mittenarm (3) in einem zweiten Aufhängungspunkt (22) um eine zweite Aufhängungsachse (32) drehbar gelagert ist, wobei die Drehbarkeit um die zweite Aufhängungsachse (32) mit gegenläufigem Drehsinn an die Drehbarkeit um die Montageachse (5) gekoppelt ist.

6. Vorrichtung (10) nach Anspruch 5, bei welcher die erste und die zweite Aufhängungsachse (31, 32) in einer Axialrichtung gesehen in einander entgegengesetzten Endbereichen des Mittenarms (3) angeordnet sind und die Montageachse (5) in einem Mittenbereich dazwischen angeordnet ist.

7. Vorrichtung (10) nach Anspruch 5 oder 6, bei welcher an einem distalen Ende (12.1) des zweiten Außenarms (12) ein zweites Klemmelement (42) angeordnet ist, das in einem zweiten distalen Aufhängungspunkt (22) an dem zweiten Außenarm (12) um eine zweite distale Aufhängungsachse (32) drehbar gelagert ist, und zwar gegenläufig an die Drehbarkeit des zweiten Außenarms (12) um die zweite Aufhängungsachse (32) gekoppelt.

8. Vorrichtung (10) nach den Ansprüchen 6 und 7, bei welchem das erste und das zweite Klemmelement (41,42) jeweils einen Klemmbereich (41.1, 42.1) haben, deren Abstand (16) sich beim Verdrehen des ersten und zweiten Außenarms (11, 12) ändert, wobei die Klemmbereiche (41.1, 41.2) trotz des veränderlichen Abstands (16) parallel zueinander ausgerichtet sind.

9. Vorrichtung (10) nach Anspruch 7 oder 8, bei welchem die Klemmelemente (41,42) sowohl an ihren einander abgewandten Außenseiten als auch an ihren einander zugewandten Innenseiten jeweils einen Klemmbereich (41.1, 41.2, 42.1, 42.2) aufweisen, also sowohl zum Einklemmen als auch zum Verspreizen nutzbar sind.

10. Verwendung einer Vorrichtung nach einem der vorstehenden Ansprüche zum Anheben einer Kiste (45) von oben.

11. Verwendung nach Anspruch 10, bei welcher der Greifer (1) zum Anheben der Kiste (45) dieser von oben angenähert wird und das distale Ende (11.1) des ersten Außenarms (11) dann durch Vergrößern des Relativabstands (6) innenseitig an der Kiste (45) verspreizt wird.

12. Verwendung nach Anspruch 10 oder 11, bei welcher die Kiste (45) eine Getränkekiste (46) ist.

13. Verwendung nach Anspruch 12 einer Vorrichtung (10) nach Anspruch 3 oder 4, wobei die Getränkekiste (46) mit dem Arretierungsmittel (41a) an ihrem Tragegriff (47) fixiert wird.

14. Verwendung nach Anspruch 12 oder 13 einer Vorrichtung (10) nach Anspruch 10, bei welcher in einem Arbeitsschritt mit den einander zugewandten Klemmbereichen (41.2, 42.2) des ersten und zweiten Klemmelements (41, 42) eine Flasche angehoben wird und in einem anderen Arbeitsschritt mit den einander abgewandten Klemmbereichen (41.1, 42.1) des ersten und zweiten Klemmelements (41, 42) die Getränkekiste (46) angehoben wird.

## Claims

1. Device (10) with a gripper (1) for gripping a box from above,
which gripper (1) has a central arm (3) which is mounted in a mounting point (4) so as to be rotatable about a mounting axis (5), and
has a first outer arm (11) which is mounted on the central arm (3) in a first suspension point (21) so as to be rotatable about a first suspension axis (31) in such a way that, with the rotatability, a relative distance (6) between an end (11.1) of the first outer arm (11), which end is distal from the central arm (3), and the mounting axis (5) can be varied,
wherein the rotatability about the first suspension axis (31) is coupled to the rotatability about the mounting axis (5) in the opposite direction of rotation,
wherein the device (10) is designed for vertically lowering the gripper (1) in order to approach the box from above, and
for rotating the central arm (3) and the first outer arm (11) in order to vary the relative distance (6) in order to grip the box,
**characterized in that**
a first clamping element (41) is arranged at the distal end (11.1) of the first outer arm (11), which first clamping element (41) is mounted in a first distal suspension point (51) on the first outer arm (11) so as to be rotatable about a first distal suspension axis (61), specifically is coupled in the opposite direction to the rotatability of the first outer arm (11) about the first suspension axis (31),
wherein the first clamping element (41) has a support (41b) which is designed such that the load rests thereon when the box is lifted.

2. Device (10) according to Claim 1, in which the axes (5, 31) are arranged on the central arm (3) so as to be rigid relative to one another.

3. Device (10) according to Claim 1 or 2, in which the first clamping element (41) has a locking means (41a) which is displaced vertically along a clamping region (41.1) of the first clamping element (41) when the clamping region (41.1) comes into abutment.

4. Device (10) according to Claim 3, in which the locking means (41a) is coupled to a support (41b) via a deflection mechanism in such a way that, in the case of a load on the support, it is moved towards the latter.

5. Device (10) according to one of the preceding claims, having a second outer arm (12) which is mounted on the central arm (3) in a second suspension point (22) so as to be rotatable about a second suspension axis (32), wherein the rotatability about the second suspension axis (32) is coupled to the rotatability about the mounting axis (5) in the opposite direction of rotation.

6. Device (10) according to Claim 5, in which the first and the second suspension axis (31, 32), as seen in an axial direction, are arranged in mutually opposite end regions of the central arm (3), and the mounting axis (5) is arranged in a central region between them.

7. Device (10) according to Claim 5 or 6, in which a second clamping element (42) is arranged at a distal end (12.1) of the second outer arm (12), which second clamping element (42) is mounted in a second distal suspension point (22) on the second outer arm (12) so as to be rotatable about a second distal suspension axis (32), namely is coupled in the opposite direction to the rotatability of the second outer arm (12) about the second suspension axis (32).

8. Device (10) according to Claims 6 and 7, in which the first and the second clamping element (41, 42) each have a clamping region (41.1, 42.1), the spacing (16) of which changes when the first and the second outer arm (11, 12) are rotated, wherein the clamping regions (41.1, 41.2) are aligned parallel to one another despite the variable spacing (16).

9. Device (10) according to Claim 7 or 8, in which the clamping elements (41, 42) each have a clamping region (41.1, 41.2, 42.1, 42.2) both on their outer sides facing away from one another and on their inner sides facing one another, that is to say can be used both for clamping and for spreading.

10. Use of a device according to one of the preceding claims for lifting a box (45) from above.

11. Use according to Claim 10, in which, in order to lift the box (45), the gripper (1) is brought closer to the latter from above and the distal end (11.1) of the first outer arm (11) is then spread on the inside of the box (45) by increasing the relative distance (6).

12. Use according to Claim 10 or 11, in which the box (45) is a beverage box (46).

13. Use according to Claim 12 of a device (10) according to Claim 3 or 4, wherein the beverage box (46) is fixed to its carrying handle (47) by the locking means (41a).

14. Use according to Claim 12 or 13 of a device (10) according to Claim 10, in which, in one working step, a bottle is lifted by the clamping regions (41.2, 42.2), facing one another, of the first and second clamping elements (41, 42), and, in another working step, the beverage box (46) is lifted by the clamping regions (41.1, 42.1), facing away from one another, of the first and second clamping elements (41, 42).

## Revendications

1. Dispositif (10) avec un préhenseur (1) pour saisir une caisse par le haut,
lequel préhenseur (1) présente un bras central (3) qui est monté à rotation autour d'un axe de montage (5) en un point de montage (4), et présente un premier bras extérieur (11) qui est monté à rotation autour d'un premier axe de suspension (31) sur le bras central (3) en un premier point de suspension (21) de telle sorte qu'une distance relative (6) entre une extrémité (11.1) du premier bras extérieur (11) distale par rapport au bras central (3) et l'axe de montage (5) puisse être modifiée avec la possibilité de rotation,
dans lequel la possibilité de rotation autour du premier axe de suspension (31) est couplée avec un sens de rotation opposé à la possibilité de rotation autour de l'axe de montage (5),
dans lequel le dispositif (10) est conçu pour abaisser verticalement le préhenseur (1) pour l'approcher de la caisse par le haut, ainsi que pour faire tourner le bras central (3) et le premier bras extérieur (11) pour modifier la distance relative (6) pour saisir la caisse,
**caractérisé en ce que**
sur l'extrémité distale (11.1) du premier bras extérieur (11) est disposé un premier élément de serrage (41) qui est monté à rotation autour d'un premier axe de suspension distal (61) sur le premier bras extérieur (11) en un premier point de suspension distal (51), et qui est couplé dans le sens opposé à la possibilité de rotation du premier bras extérieur (11) autour du premier axe de suspension (31),
dans lequel le premier élément de serrage (41) présente un appui (41b) qui est conçu pour que la charge repose dessus lors du soulèvement de la caisse.

2. Dispositif (10) selon la revendication 1, dans lequel les axes (5, 31) sont disposés de manière rigide l'un par rapport à l'autre sur le bras central (3).

3. Dispositif (10) selon la revendication 1 ou 2, dans lequel le premier élément de serrage (41) présente un moyen de blocage (41a) qui est déplacé verticalement le long d'une zone de serrage (41.1) du premier élément de serrage (41) lorsque la zone de serrage (41.1) vient en butée.

4. Dispositif (10) selon la revendication 3, dans lequel le moyen de blocage (41a) est couplé à un appui (41b) par le biais d'un mécanisme de déviation de telle sorte qu'il soit déplacé vers l'appui lors d'une charge sur celui-ci.

5. Dispositif (10) selon l'une quelconque des revendications précédentes, avec un deuxième bras extérieur (12) qui est monté à rotation autour d'un deuxième axe de suspension (32) sur le bras central (3) en un deuxième point de suspension (22), dans lequel la possibilité de rotation autour du deuxième axe de suspension (32) est couplée avec un sens de rotation opposé à la possibilité de rotation autour de l'axe de montage (5).

6. Dispositif (10) selon la revendication 5, dans lequel les premier et deuxième axes de suspension (31, 32), vus dans une direction axiale, sont disposés dans des régions d'extrémité mutuellement opposées du bras central (3) et l'axe de montage (5) est disposé dans une région centrale entre celles-ci.

7. Dispositif (10) selon la revendication 5 ou 6, dans lequel sur une extrémité distale (12.1) du deuxième bras extérieur (12) est disposé un deuxième élément de serrage (42) qui est monté à rotation autour d'un deuxième axe de suspension distal (32) sur le deuxième bras extérieur (12) en un deuxième point de suspension distal (22), et qui est couplé dans le sens opposé à la possibilité de rotation du deuxième bras extérieur (12) autour du deuxième axe de suspension (32).

8. Dispositif (10) selon les revendications 6 et 7, dans lequel les premier et deuxième éléments de serrage (41, 42) ont chacun une région de serrage (41.1, 42.1) dont la distance (16) varie lors de la rotation des premier et deuxième bras extérieurs (11, 12), les régions de serrage (41.1, 41.2) étant orientées parallèlement l'une à l'autre malgré la distance variable (16).

9. Dispositif (10) selon la revendication 7 ou 8, dans lequel les éléments de serrage (41, 42) présentent chacun une région de serrage (41.1, 41.2, 42.1, 42.2) aussi bien sur leurs côtés extérieurs opposés l'un à l'autre que sur leurs côtés intérieurs tournés l'un vers l'autre, c'est-à-dire qu'ils peuvent être utilisés aussi bien pour le serrage que pour l'écartement.

10. Utilisation d'un dispositif selon l'une quelconque des revendications précédentes pour soulever une caisse (45) par le haut.

11. Utilisation selon la revendication 10, dans laquelle le préhenseur (1) pour soulever la caisse (45) s'approche de celle-ci par le haut et l'extrémité distale (11.1) du premier bras extérieur (11) est ensuite écartée du côté intérieur de la caisse (45) par augmentation de la distance relative (6).

12. Utilisation selon la revendication 10 ou 11, dans laquelle la caisse (45) est une caisse à boissons (46).

13. Utilisation selon la revendication 12 d'un dispositif (10) selon la revendication 3 ou 4, dans laquelle la caisse à boissons (46) est fixée avec le moyen de blocage (41a) sur sa poignée de transport (47).

14. Utilisation selon la revendication 12 ou 13 d'un dispositif (10) selon la revendication 10, dans laquelle une bouteille est soulevée dans une étape de travail avec les zones de serrage (41.2, 42.2) tournées l'une vers l'autre du premier et du deuxième élément de serrage (41, 42) et la caisse à boissons (46) est soulevée dans une autre étape de travail avec les zones de serrage (41.1, 42.1) opposées l'une à l'autre du premier et du deuxième élément de serrage (41, 42).
